# EUROPÄISCHE PATENTSCHRIFT

(11) **EP 0 646 634 B1**
(45) Veröffentlichungstag und Bekanntmachung des Hinweises auf die Patenterteilung: **26.08.1998**
(21) Anmeldenummer: 94115072.4
(22) Anmeldetag: 24.09.1994
(51) Int. Cl.: C09K 3/18

(54) **Enteisungsmittel und Vereisungsschutzmittel für Flugzeuge**
De-icing and anti-icing composition for aircraft
Composion déglaçante et antidérapante pour avions

(30) Priorität: 02.10.1993 DE 4333646
(43) Veröffentlichungstag der Anmeldung: 05.04.1995
(73) Patentinhaber: Clariant GmbH, 65929 Frankfurt am Main (DE)
(72) Erfinder: Stankowiak, Achim, Dr., D-84503 Altötting (DE); Pöllmann, Klaus, Dr., D-84489 Burghausen (DE); Kapfinger, Josef, D-84326 Falkenberg (DE)

(56) Entgegenhaltungen:
- WO-A-94/05741
- US-A- 4 585 571

## Beschreibung

Enteisungsmittel und Vereisungsschutzmittel für Flugzeuge (im folgenden der Kürze halber einfach Enteisungsmittel oder Enteisungsflüssigkeiten genannt) werden zur Entfernung von Eis, Schnee und/oder Reif von bestimmten Flugzeugoberflächen und zur Vermeidung derartiger Ablagerungen auf diesen Flächen eingesetzt. Die Zeitspanne, in der die Enteisungsflüssigkeit Schutz gegen die Wiederbildung von Eis, Schnee und/oder Reif am Flugzeug gibt, wird als Wiedervereisungsschutzzeit oder Holdovertime bezeichnet.

In GB-A 1 026 150 ist eine Enteisungsflüssigkeit beschrieben, die im wesentlichen aus Glykol und Wasser als Hauptbestandteile und aus einer vergleichsweise geringen Menge von einem tertiären Amin aus der Gruppe der ethoxylierten Fettamine und mindestens einem Korrosionsinhibitor besteht. Auf die verstärkende Wirkung von wasserlöslichen Tensiden beim Auftauen oder Schmelzen von Schnee und Eis wird auch in US-A 3 412 030 hingewiesen.

In US-A 4 585 571 wird ein Enteisungsmittel beschrieben, das im wesentlichen aus Glykol als Hauptkomponente und einer Kombination von drei speziellen Tensiden besteht, und zwar einem anionischen Tensid aus der Gruppe der Fettsäurediamine, einem hydrophilen Tensid aus der Gruppe der Mono- oder Polyalkoholamine und einem anionisch hydrophilen Tensid aus der Gruppe der sulfatierten oder sulfonierten Verbindungen als Kupplungsmittel für die hydrophoben Reste im Fettsäurediamin und dem hydrophilen Alkoholamin. Obwohl diese Enteisungsflüssigkeit einen länger andauernden Schutz gegen Wiedervereisung aufweisen soll, läßt sie dennoch unter anderem aufgrund des komplizierten Tensidsystems zu wünschen übrig.

In einer Reihe von Druckschriften auf dem Gebiet der Enteisungs- und Vereisungsschutzflüssigkeiten für Flugzeuge, die sich unter anderem mit der Erhöhung der Holdovertime beschäftigen, werden dafür Verdickungsmittel empfohlen, weil man offensichtlich überzeugt ist, daß eine erhöhte Holdovertime nur mit Hilfe von Verdickungsmitteln zu erreichen ist, vergleiche zum Beispiel US-A 4 358 389, DE-A-31 42 059 (Derwent-Referat AN 44404K/19), US-A 4 744 913 und EP-B 0 360 183 (Derwent-Referat AN 90/092789/13). Die hier beschriebenen Enteisungsmittel bestehen also im wesentlichen aus Glykol und Wasser, mindestens einem Verdickungsmittel, zum Beispiel aus der Gruppe der Polyacrylate, mindestens einem Tensid, zum Beispiel aus der Gruppe der Alkylarylsulfonate und oxalkylierten Alkohole, Korrosionsinhibitoren und gegebenenfalls pH-Wert-Regulatoren. Diese verdickten Enteisungsmittel, das sind pseudoplastische Flüssigkeiten mit einem Nicht-Newtonschen-Fließverhalten, zeichnen sich im Vergleich zu den unverdickten durch eine beträchtlich längere Wiedervereisungsschutzzeit aus.

In "Recommandations for De-/Anti-Icing of Aircraft on the Ground" (Edition März 1993) der Association of European Airlines (AEA) werden zwei Typen von Flugzeugenteisungsflüssigkeiten spezifiziert. AEA-Typ-I-Flüssigkeiten bestehen im wesentlichen aus Glykol, Wasser und Korrosionsinhibitoren sowie gegebenenfalls Tensiden und pH-Wert-Regulatoren und AEA-Typ-II-Flüssigkeiten enthalten zusätzlich dazu ein Verdickungsmittel. Enteisungsflüssigkeiten vom AEA-Typ I sind auch die sogenannten "Military Specification Fluids" mit Natrium-di-(2-ethylhexyl)-sulfosuccinat als Tensid.

Die wichtigsten technischen Eigenschaften von Flugzeugenteisungsmitteln sind ein möglichst langer Schutz gegen Wiedervereisung der Tragflächen vor dem Start unter extremen Wetterbedingungen und gutes Abfließen des Enteisungsmittels von Rumpf und Tragflächen beim Start des Flugzeugs. Ferner sollen die Eigenschaften der Enteisungsflüssigkeiten bei Lagerung bei Temperaturen bis zu 100 °C und bei Scherung der Flüssigkeit durch Pumpen und Sprühdüsen nicht beeinträchtigt werden. Während nun die verdickten Enteisungsmittel die Forderungen hinsichtlich Holdovertime gut erfüllen, fließen sie im Vergleich zu den unverdickten im allgemeinen langsamer von den Tragflächen ab. Typ-II-Enteisungsmittel sind aufgrund ihres polymeren Verdickers auch wesentlich empfindlicher gegen Scherung und Hitze, so daß bei ihrer Anwendung spezielle technisch aufwendige Sprühgeräte nötig sind. Im Gegensatz dazu sind unverdickte Typ-I-Enteisungsmittel im allgemeinen scher- und temperaturunempfindlich und fließen beim Start schneller von den Tragflächen ab. Sie zeigen jedoch den wesentlichen Nachteil einer nur kurzen Schutzzeit gegen Wiedervereisung. In den Testmethoden, die in den genannten AEA-Recommandations zur Bestimmung der Holdovertime beschrieben sind, nämlich im "Water Spray Endurance Test" (der gefrierenden Regen simuliert) und im "High Humidity Endurance Test" (der Reifbildung simuliert), werden deshalb für Typ-I-Flüssigkeiten nur mindestens 3 Minuten beziehungsweise 20 Minuten Schutzzeit gefordert, für Typ-II-Flüssigkeiten aber unter gleichen Bedingungen mindestens 30 Minuten beziehungsweise 240 Minuten.

Die Aufgabe der Erfindung besteht demnach darin, ein AEA-Typ-I-Enteisungsmittel zu finden, das einfach aufgebaut ist und eine verlängerte Holdovertime aufweist. Die neue Enteisungsflüssigkeit soll also die Vorteile von Typ-I- und Typ-II-Flüssigkeiten in sich vereinen ohne deren nachteilige Eigenschaften zu haben. Sie soll ferner so beschaffen sein, daß die gebrauchte Flüssigkeit in einfacher Weise aufarbeitbar und wiedereinsetzbar ist.

Das erfindungsgemäße Enteisungsmittel und Vereisungsschutzmittel für Flugzeuge auf der Basis von Glykolen und Wasser besteht im wesentlichen aus
a) 60 bis 97 Gew.-%, vorzugsweise 80 bis 95 Gew.-%, von mindestens einem Glykol aus der Gruppe der Alkylenglykole mit 2 bis 3 C-Atomen und Oxalkylenglykole mit 4 bis 6 C-Atomen,
b) 0,01 bis 1 Gew.-%, vorzugsweise 0,1 bis 0,5 Gew.-%, von mindestens einem nichtionischen Tensid aus der Gruppe der Fettalkohole und der mit einem niedermolekularen Alkoxid alkoxylierten Fettalkohole mit 1 bis 10 Alkoxid-Einheiten, vorzugsweise 1 bis 8 Alkoxid-Einheiten,
c) 0,01 bis 0,8 Gew.-%, vorzugsweise 0,03 bis 0,5 Gew.-%, von mindestens einem Korrosionsinhibitor und
d) Wasser als Rest auf 100 Gew.-%,
Gewichtsprozente bezogen auf das Gewicht des Mittels.

Es wurde ferner gefunden, daß ein noch höherer Holdovertime-Wert erreicht werden kann, wenn als Tensidkomponente eine Kombination von dem angegebenen nichtionischen Tensid b) und einem anionischen Tensid b') aus der Gruppe der Alkalimetall-alkylarylsulfonate in einer Menge von ebenfalls 0,01 bis 1 Gew.-%, vorzugsweise 0,1 bis 0,5 Gew.-%, eingesetzt wird. Die beiden Tensidverbindungen b) und b'), wobei das Tensid b') vor allem als Spreitmittel wirkt, werden vorzugsweise im Gewichtsverhältnis von etwa 1 : (0,5 bis 1) und besonders bevorzugt im Gewichtsverhältnis von etwa 1 : 1 eingesetzt.

Die Komponente a) der erfindungsgemäßen Flüssigkeit ist vorzugsweise Ethylenglykol, Propylenglykol (1,2-Propylenglykol oder 1,3-Propylenglykol), Diethylenglykol, Dipropylenglykol oder eine Mischung von zwei oder mehreren dieser Glykole, wobei Propylenglykole besonders bevorzugt sind. Die Glykole dienen vor allem zur Erniedrigung des Gefrierpunktes und stellen neben Wasser die Hauptkomponente der Flüssigkeit dar.

Die Komponente b) ist ein Fettalkohol, das ist ein Alkohol mit 6 bis 24 C-Atomen im Alkylrest, vorzugsweise 8 bis 18 C-Atomen, oder ein Alkoxylat davon mit 1 bis 10 Molekülen, vorzugsweise 1 bis 8 Molekülen, von einem niedermolekularen Alkylenoxid im alkoxylierten Fettalkohol. Das niedermolekulare Alkylenoxid ist vorzugsweise Ethylenoxid, Propylenoxid oder eine Mischung davon, wobei Ethylenoxid bevorzugt ist. Der genannte Alkylrest im Fettalkohol kann gerade oder verzweigt sein, wobei gerade bevorzugt ist, und gesättigt oder ungesättigt mit vorzugsweise 1 bis 3 Doppelbindungen. Als Beispiele seien genannt: Octyl-, Decyl-, Dodecyl-, Isotridecyl- und Stearylalkohol, ferner Oleyl-, Cocosalkyl- und Talgalkylalkohol. Die Komponente b) kann auch eine Mischung aus den genannten Fettalkoholen und/oder Fettalkoholalkoxylaten sein, so zum Beispiel ein Fettalkoholgemisch mit einem C₁₂-Alkylrest und C₁₄-Alkylrest (C₁₂/C₁₄-Fettalkohol).

Die Komponente b') ist vorzugsweise ein Kalium- und/oder Natrium-alkylarylsulfonat mit einer oder mehreren, vorzugsweise einer oder zwei Sulfonat-Gruppen (SO₃K- oder SO₃Na-Gruppen), einer oder mehreren, vorzugsweise einer oder zwei Alkylgruppen mit 5 bis 18 C-Atomen, vorzugsweise 12 bis 18 C-Atomen, und einem oder mehreren, vorzugsweise einem oder zwei Benzolringen. Bevorzugt sind Alkalimetall-(Kaliumund/oder Natrium)-alkylbenzolsulfonate mit 12 bis 18 C-Atomen in der Alkylgruppe. Da bei der Herstellung von Alkylarylsulfonaten auch von Kohlenwasserstoffgemischen ausgegangen wird, wie sie beispielsweise bei der Erdölaufbereitung als Fraktionen anfallen, kann die Alkylgruppe auch derartige Gemische darstellen. Dabei beträgt die Anzahl der Kohlenstoffatome vorzugsweise 12 bis 18 (das ist eine mittlere Anzahl von 15).

Die Komponente c) umfaßt Korrosionsinhibitoren, wie sie für Flüssigkeiten auf der Basis von Gykolen und Wasser gebräuchlich sind. Geeignete Korrosionsinhibitoren sind Alkalimetallphosphate, Niedrig-Alkylphosphate wie Ethylphosphat, Dimethylphosphat, Isopropylphosphat und dergleichen, Imidazole wie 1H-Imidazol, Methylimidazol, Benzimidazol und dergleichen und Triazole wie Benzotriazol und Tolyltriazol, wobei die Triazole bevorzugt sind.

Die Komponente d) ist Wasser. Es wird vorzugsweise vollentsalztes Wasser eingesetzt.

Der pH-Wert von AEA-Typ-I-Enteisungsflüssigkeiten soll 6,5 bis 10 betragen, vorzugsweise 7 bis 9. Sofern die erfindungsgemäße Flüssigkeit einen solchen Wert nicht ohnehin aufweist, kann er einfach durch geeignete pH-Regulatoren eingestellt werden. Im allgemeinen wird der Flüssigkeit eine basische Verbindung zuzusetzen sein. Geeignete basische Verbindungen sind solche aus der Gruppe der Alkalimetallhydroxide wie NaOH und KOH, der Alkylamine wie Butylamin, Hexylamin, Octylamin und Isononylamin und der Alkanolamine wie Mono-, Di- und Triethanolamin. Die Alkalimetallhydroxide sind bevorzugt.

Die Herstellung des erfindungsgemäßen Enteisungsmittels und Vereisungsschutzmittels erfolgt durch Zusammenmischen der einzelnen (bekannten und im Handel erhältlichen) Komponenten in beliebiger Reihenfolge, was zum Beispiel in einem mit Rührer ausgestatteten Behälter vorgenommen werden kann.

Das erfindungsgemäße Enteisungsmittel weist alle Vorteile von unverdickten Enteisungsflüssigkeiten auf und besitzt darüber hinaus eine Holdovertime, die beträchtlich über dem von AEA-Typ-I-Flüssigkeiten geforderten Wert liegt. Es vereint also sowohl die Vorteile von unverdickten als auch jene von verdickten Flüssigkeiten. Dies ist ein unerwartetes Ergebnis. Bis in die jüngste Zeit ging nämlich die Fachwelt offensichtlich davon aus, daß eine längere Holdovertime bei Flüssigkeiten auf der Basis von Glykolen und Wasser nur mit Hilfe von Verdickungsmitteln erreicht werden kann.

Bei der Anwendung zur Enteisung und Konservierung der zu behandelnden Flugzeugflächen wird das Enteisungsmittel entweder als solches, das heißt konzentriert, oder verdünnt mit Wasser eingesetzt, vorzugsweise im Verhältnis von 1 : 1. Das Aufbringen des Enteisungsmittels auf die zu behandelnden Flächen kann durch Aufsprühen mit den üblichen Ausrüstungen wie Sprühdüsen und dergleichen durchgeführt werden.

Die Erfindung wird nun durch Beispiele und Vergleichsbeispiele noch näher erläutert.

### Beispiel 1

Es wurde ein erfindungsgemäßes Enteisungsmittel und Vereisungsschutzmittel hergestellt durch Mischen der folgenden Komponenten (Konzentrat):

| | | |
|---|---|---|
| 80,00 | Gew.-% | 1,2-Propylenglykol |
| 0,05 | Gew.-% | Benzotriazol |
| 0,25 | Gew.-% | Natrium-alkylbenzolsulfonat mit einer mittleren Anzahl von C-Atomen in der Alkylgruppe von 15 |
| 0,20 | Gew.-% | C₁₂/C₁₄-Fettalkohol ethoxyliert mit 2 mol Ethylenoxid |
| 0,015 | Gew.-% | Kaliumhydroxid |
| 19,485 | Gew.-% | Wasser. |

Dieses Enteisungsmittel hat einen pH-Wert von 9. Die Holdovertime wurde nach dem "AEA Water Spray Endurance Test" (Test 1) und nach dem "AEA High Humidity Endurance Test" (Test 2) ermittelt, und zwar für die konzentrierte Formulierung und die mit Wasser 1 : 1 verdünnte Formulierung. Die Werte sind nachstehend zusammengefaßt:

| Beispiel 1 | Test 1 | Test 2 |
|---|---|---|
| konzentriert | 12 Minuten | größer 180 Minuten |
| 50 : 50 | 7 Minuten | größer 50 Minuten |

### Vergleichsbeispiel 1

Beispiel 1 wurde wiederholt, jedoch unter Weglassen des ethoxylierten Fettalkohols. Es wurden also die folgenden Komponenten gemischt:

| | | |
|---|---|---|
| 80,00 | Gew.-% | 1,2-Propylenglykol |
| 0,05 | Gew.-% | Benzotriazol |
| 0,25 | Gew.-% | Alkylbenzolsulfonat von Beispiel 1 |
| 0,015 | Gew.-% | Kaliumhydroxid |
| 19,685 | Gew.-% | Wasser. |

Der Test des Mittels mit pH-Wert 9 erfolgte wie in Beispiel 1:

| Vergleichsbeispiel 1 | Test 1 | Test 2 |
|---|---|---|
| konzentriert | 5 Minuten | 25 Minuten |
| 50 : 50 | 3 Minuten | 20 Minuten |

### Beispiel 2

Bei diesem erfindungsgemäßen Beispiel wurden die nachstehenden Komponenten gemischt:

| | | |
|---|---|---|
| 90,00 | Gew.-% | Diethylenglykol |
| 0,04 | Gew.-% | Benzotriazol |
| 0,25 | Gew.-% | Alkylbenzolsulfonat von Beispiel 1 |
| 0,20 | Gew.-% | C₁₂/C₁₄-Fettalkohol ethoxyliert mit 2 mol Ethylenoxid |
| 0,015 | Gew.-% | Kaliumhydroxid |
| 9,495 | Gew.-% | Wasser. |

Der Test des Mittels mit pH-Wert 9 erfolgte wie in Beispiel 1:

| Beispiel 2 | Test 1 | Test 2 |
|---|---|---|
| konzentriert | 11 Minuten | größer 180 Minuten |
| 50 : 50 | 5 Minuten | größer 60 Minuten |

### Vergleichsbeispiel 2

Beispiel 2 wurde wiederholt, jedoch unter Weglassen des ethoxylierten Fettalkohols. Es wurden also die folgenden Komponenten gemischt:

| | | |
|---|---|---|
| 90,00 | Gew.-% | Diethylenglykol |
| 0,04 | Gew.-% | Benzotriazol |
| 0,25 | Gew.-% | Alkylbenzolsulfonat von Beispiel 1 |
| 0,015 | Gew.-% | Kaliumhydroxid |
| 9,695 | Gew.-% | Wasser. |

Der Test des Mittels mit pH-Wert 9 erfolgte wie in Beispiel 1:

| Vergleichsbeispiel 2 | Test 1 | Test 2 |
|---|---|---|
| konzentriert | 4 Minuten | 45 Minuten |
| 50 : 50 | 3 Minuten | 23 Minuten |

### Beispiel 3

Es wurde ein erfindungsgemäßes Enteisungsmittel und Vereisungsschutzmittel hergestellt durch Mischen der folgenden Komponenten:

| | | |
|---|---|---|
| 90,00 | Gew.-% | Diethylenglykol |
| 0,04 | Gew.-% | Benzotriazol |
| 0,25 | Gew.-% | Alkylbenzolsulfonat von Beispiel 1 |
| 0,40 | Gew.-% | Talgfettalkohol ethoxyliert mit 8 mol Ethylenoxid |
| 0,015 | Gew.-% | Kaliumhydroxid |
| 9,295 | Gew.-% | Wasser. |

Dieses Enteisungsmittel hat einen pH-Wert von 9. Es wurde nur nach dem wichtigeren Test 1 getestet:

| Beispiel 3 | Test 1 |
|---|---|
| konzentriert | 16 Minuten |
| 50 : 50 | 4 Minuten |

### Beispiel 4

Bei diesem erfindungsgemäßen Beispiel wurden die nachstehenden Komponenten gemischt:

| | | |
|---|---|---|
| 90,00 | Gew.-% | Diethylenglykol |
| 0,04 | Gew.-% | Benzotriazol |
| 0,25 | Gew.-% | Alkylbenzolsulfonat von Beispiel 1 |
| 0,40 | Gew.-% | Kokosfettalkohol ethoxyliert mit 5 mol Ethylenoxid |
| 0,015 | Gew.-% | Kaliumhydroxid |
| 9,295 | Gew.-% | Wasser. |

Dieses Enteisungsmittel hat einen pH-Wert von 9. Es wurde nur nach dem wichtigeren Test 1 getestet:

| Beispiel 4 | Test 1 |
|---|---|
| konzentriert | 17 Minuten |
| 50 : 50 | 4 Minuten |

## Patentansprüche

1. Enteisungsmittel und Vereisungsschutzmittel für Flugzeuge auf der Basis von Glykolen und Wasser bestehend im wesentlichen aus
a) 60 bis 97 Gew.-% von mindestens einem Glykol aus der Gruppe der Alkylenglykole mit 2 bis 3 C-Atomen und Oxalkylenglykole mit 4 bis 6 C-Atomen,
b) 0,01 bis 1 Gew.-% von mindestens einem nichtionischen Tensid aus der Gruppe der Fettalkohole und der mit einem niedermolekularen Alkoxid alkoxylierten Fettalkohole mit 1 bis 10 Alkoxid-Einheiten,
c) 0,01 bis 0,8 Gew.-% von mindestens einem Korrosionsinhibitor und
d) Wasser als Rest auf 100 Gew.-%,
Gewichtsprozente bezogen auf das Gewicht des Mittels.

2. Mittel nach Anspruch 1, bestehend im wesentlichen aus
a) 60 bis 97 Gew.-% von mindestens einem Glykol aus der Gruppe der Alkylenglykole mit 2 bis 3 C-Atomen und Oxalkylenglykole mit 4 bis 6 C-Atomen,
b) 0,01 bis 1 Gew.-% von mindestens einem nichtionischen Tensid aus der Gruppe der Fettalkohole und der mit einem niedermolekularen Alkoxid alkoxylierten Fettalkohole mit 1 bis 10 Alkoxid-Einheiten,
b') 0,01 bis 1 Gew.-% von mindestens einem anionischen Tensid aus der Gruppe der alkylarylsulfonate,
c) 0,01 bis 0,8 Gew.-% von mindestens einem Korrosionsinhibitor und
d) Wasser als Rest auf 100 Gew.-%.

3. Mittel nach Anspruch 1, dadurch gekennzeichnet, daß es die Komponenten a) bis d) in den nachstehend angegebenen Mengen enthält:
a) 80 bis 95 Gew.-%,
b) 0,1 bis 0,5 Gew.-%,
c) 0,03 bis 0,5 Gew.-% und
d) Wasser als Rest auf 100 Gew.-%.

4. Mittel nach Anspruch 2, dadurch gekennzeichnet, daß es die Komponenten a) bis d) in den nachstehend angegebenen Mengen enthält:
a) 80 bis 95 Gew.-%,
b) 0,1 bis 0,5 Gew.-%,
b') 0,1 bis 0,5 Gew.-%,
c) 0,03 bis 0,5 Gew.-% und
d) Wasser als Rest auf 100 Gew.-%.

5. Mittel nach Anspruch 2 oder 4, dadurch gekennzeichnet, daß die Komponente b') ein anionisches Tensid aus der Gruppe der Alkalimetall-alkylbenzolsulfonate mit 12 bis 18 C-Atomen in der Alkylgruppe ist.

6. Mittel nach den Ansprüchen 1 bis 5, dadurch gekennzeichnet, daß die Komponente b) ein nichtionisches Tensid aus der Gruppe der C₈ bis C₁₈-Fettalkohole und der C₈ bis C₁₈-Fettalkohole ethoxyliert mit 1 bis 8 Ethylenoxid-Einheiten ist.

7. Mittel nach den Ansprüchen 1 bis 6, dadurch gekennzeichnet, daß die Komponente c) ein Korrosionsinhibitor aus der Gruppe der Alkalimetallphosphate, Niedrig-Alkylphosphate, Imidazole und Triazole ist.

8. Mittel nach den Ansprüchen 1 bis 7, dadurch gekennzeichnet, daß es einen pH-Wert von 7 bis 9 hat.

## Claims

1. A de-icing composition and anti-icing composition for aircraft which is based on glycols and water and comprises essentially
a) 60 to 97% by weight of at least one glycol from the group consisting of alkylene glycols having 2 to 3 carbon atoms and oxyalkylene glycols having 4 to 6 carbon atoms,
b) 0.01 to 1% by weight of at least one nonionic surfactant from the group consisting of fatty alcohols and fatty alcohols which are alkoxylated with a low molecular weight alkoxide and have 1 to 10 alkoxide units,
c) 0.01 to 0.8% by weight of at least one corrosion inhibitor and
d) water as the remainder to make up 100% by weight, the percentages by weight being based on the weight of the composition.

2. A composition as claimed in claim 1, comprising essentially
a) 60 to 97% by weight of at least one glycol from the group consisting of alkylene glycols having 2 to 3 carbon atoms and oxyalkylene glycols having 4 to 6 carbon atoms,
b) 0.01 to 1% by weight of at least one nonionic surfactant from the group consisting of fatty alcohols and fatty alcohols which are alkoxylated with a low molecular weight alkoxide and have 1 to 10 alkoxide units,
b') 0.01 to 1% by weight of at least one anionic surfactant from the group consisting of alkali metal alkylarylsulfonates,
c) 0.01 to 0.8% by weight of at least one corrosion inhibitor and
d) water as the remainder to make up 100% by weight.

3. A composition as claimed in claim 1, which comprises components a) to d) in the amounts stated below:
a) 80 to 95% by weight,
b) 0.1 to 0.5% by weight,
c) 0.03 to 0.5% by weight and
d) water as the remainder to make up 100% by weight.

4. A composition as claimed in claim 2, which comprises components a) to d) in the amounts stated below:
a) 80 to 95% by weight,
b) 0.1 to 0.5% by weight,
b') 0.1 to 0.5% by weight,
c) 0.03 to 0.5% by weight and
d) water as the remainder to make up 100% by weight.

5. A composition as claimed in claim 2 or 4, wherein component b') is an anionic surfactant from the group consisting of alkali metal alkylbenzenesulfonates having 12 to 18 carbon atoms in the alkyl group.

6. A composition as claimed in claims 1 to 5, wherein component b) is a nonionic surfactant from the group consisting of C₈ to C₁₈-fatty alcohols and C₈ to C₁₈-fatty alcohols ethoxylated with 1 to 8 ethylene oxide units.

7. A composition as claimed in claims 1 to 6, wherein component c) is a corrosion inhibitor from the group consisting of alkali metal phosphates, lower alkyl phosphates, imidazoles and triazoles.

8. A composition as claimed in claims 1 to 7, which has a pH of 7 to 9.

## Revendications

1. Agent de dégivrage et agent antigivre pour avions, à base de glycols et d'eau, constitué pour l'essentiel
a) de 60 à 97 % en poids d'au moins un glycol choisi dans le groupe des alkylèneglycols ayant de 2 à 3 atomes de carbone et des glycols alcoxylés ayant de 4 à 6 atomes de carbone,
b)de 0,01 à 1 % en poids d'au moins un tensioactif anionique choisi dans le groupe des alcools gras et des alcools gras, alcoxylés par un alcoxy à faible masse moléculaire, avec 1 à 10 motifs alcoxy,
c) de 0,01 à 0,8 % en poids d'au moins un inhibiteur de corrosion, et
d) de l'eau, pour compléter à 100 % en poids,
les pourcentages en poids étant rapportés au poids de l'agent.

2. Agent selon la revendication 1, constitué pour l'essentiel
a) de 60 à 97 % en poids d'au moins un glycol choisi dans le groupe des alkylèneglycols ayant de 2 à 3 atomes de carbone et des glycols alcoxylés ayant de 4 à 6 atomes de carbone,
b) de 0,01 à 1 % en poids d'au moins un tensioactif anionique choisi dans le groupe des alcools gras et des alcools gras, alcoxylés par un alcoxy à faible masse moléculaire, avec 1 à 10 motifs alcoxy,
b') de 0,01 à 1 % en poids d'au moins un tensioactif anionique choisi dans le groupe des alkylarylsulfonates de métaux alcalins,
c) de 0,01 à 0,8 % en poids d'au moins un inhibiteur de corrosion, et
d) de l'eau, pour compléter à 100 % en poids,

3. Agent selon la revendication 1, caractérisé en ce qu'il contient les composants a) à d) en les quantités indiquées ci-après :
a) de 80 à 95 % en poids,
b) de 0,1 à 0,5 % en poids,
c) de 0,03 à 0,5 % en poids, et
d) de l'eau, pour compléter à 100 % en poids.

4. Agent selon la revendication 2, caractérisé en ce qu'il contient les composants a) à d) en les quantités indiquées ci-après :
a) de 80 à 95 % en poids,
b) de 0,1 à 0,5 % en poids,
b') de 0,1 à 0,5 % en poids,
c) de 0,03 à 0,5 % en poids, et
d) de l'eau, pour compléter à 100 % en poids.

5. Agent selon la revendication 2 ou 4, caractérisé en ce que le composant b') est un tensioactif anionique choisi dans le groupe des alkylbenzènesulfonates de métaux alcalins ayant de 12 à 18 atomes de carbone dans le groupe alkyle.

6. Agent selon les revendications 1 à 5, caractérisé en ce que le composant b) est un tensioactif non-ionique choisi dans le groupe des alcools gras en C₈ à C₁₈ et des alcools gras en C₈ à C₁₈ éthoxylés par 1 à 8 motifs oxyde d'éthylène.

7. Agent selon les revendications 1 à 6, caractérisé en ce que le composant c) est un inhibiteur de corrosion choisi dans le groupe des phosphates de métaux alcalins, des phosphates d'alkyle inférieur, des imidazoles et des triazoles.

8. Agent selon les revendications 1 à 7, caractérisé en ce qu'il a un pH de 7 à 9.
